# EUROPEAN PATENT SPECIFICATION

(11) **EP 2 865 585 B1**
(45) Date of publication and mention of the grant of the patent: **14.10.2015**
(21) Application number: 13005111.3
(22) Date of filing: 26.10.2013
(51) Int. Cl.: B62D 53/00

(54) **Transport set**
Transportsatz
Ensemble de transport

(43) Date of publication of application: 29.04.2015
(73) Proprietor: WAMECH Producent Wozkow Przemyslowych Piotr i Albina Wasik Spolka Jawna, 30-435 Krakow (PL)
(72) Inventor: Gruza, Antoni, 32-010 Kocmyrzów (PL)
(74) Representative: Hubisz, Ryszard

(56) References cited:
- EP-A1- 2 357 117
- AT-U1- 10 901
- DE-U1-202009 008 725
- DE-U1-202011 100 028

## Description

The present invention relates to a transport set comprising a base transport platform and a transport carriage used to transport components or ready-made products in plants or various warehouses, depots and storage areas, according to the preamble of claim 1.

Principles of modem economy require taking any actions towards rationalisation of operations, among other things by reducing an area of production or storage facilities. Reduction of the area entails the necessity of miniaturization of the internal transport. Therefore, dispensed with all kinds of forklifts used for loading large platform carriages in favour of small, but at the same time with high-capacity carriages with high significant maneuverability in the small area, which should be able to forming them into trains.

There are known transport sets according to prior art, comprising base carriages with unfolded sides, which at the same time, after unfolding, serve as a ramp for loading smaller transport carriages on them as well as transport sets where manual or hand carriages are suspended in the base carriages.

A transport set manufactured by the Still Company is also known, and this is the closest solution to the invention herein.

This set comprises a trailer and a transportation carriage. The trailer is in the form of a platform with an open E letter shaped frame, made of steel profiles, whose side arms are used as guides for the specified overall dimensions of the transportation carriage. The platform frame is seated on two wheels located in the central part of the construction, which are integrated with the load bearing system, most frequently pneumatic.

The transport carriage, used to transport various cargo in containers, comprises a steel frame seated on four swivel wheels, which allow entering the trailer.

Trailers can move as single units strapped or hooked together in trains using drawbars and hooks located at the opposite ends. Stability of the construction, i.e. levelling, is achieved by additional supporting wheels fixed to the drawbar.

The transport set is designed to carry loads on flat surfaces, without ramps. Otherwise, there would be contact between wheels of the transport carriage with the ground and may occur loss of stability.

Trailers are hauled by a special tractor equipped with a compressor and pressure tank. Air, through the pressure hoses located on the side of the drawbar, is supplied to the actuators and enables raising and lowering of the trailers. Subsequent trailers are connected in series, which means that the whole train set is raised and lowered at the same time.

Loading of the trailers takes place by lowering the platform below the level of the manual carriage frame and then placing it inside the cargo space.

After locking, thus securing the cargo, the platform is raised to a level that will cause to loss of contact of transport carriage wheels with the ground.

The state of the art document DE202009008725A shows a transport set comprising a transportation platform or a base carriage and a transport carriage able to be raised and rest on the base carriage, wherein the base carriage, resting on four swivel wheels, has a C-shaped frame with side arms located at an angle in relation to its longitudinal axis and equipped with sliding beds with partially half-open vertical rollovers and a locking mechanism whereby the transport carriage located between the side arms of the base carriage is equipped with a chassis frame that seats or rests on four swivel wheels, a coupling system cooperating with a locking mechanism, immobilising the transport carriage on the base carriage and a raising and locking mechanism with a directional mechanism and a transport frame seating or resting on the chassis frame and adapted to enter on the sliding beds of the base carriage having a width, as measured in the direction of longitudinal axis of the base carriage, larger than a distance between the bottom side planes of the sliding beds and less than a distance between top vertical side planes of the sliding beds, which are equipped with partially half-open rollovers.

The aforementioned transport sets can be found in versions where the system is hydraulically or electrically controlled and driven.

The aim of the present invention is to provide an ergonomic transport set, which allows the elimination of complicated, emergency and expensive raising system, driven by external media such as air, hydraulic fluids or electrical current, thus allow to eliminate the necessity to use a specialized tractor and to pull by any mechanism, while at the same time maintaining good traction and a predictable track.

The aim of the invention is also to enable an individual loading and unloading of transport carriages from the base carriages, regardless of their number in the train, and to enable transport along ramps without losing the stability of the set.

The aim of the invention is attained by providing the transport platform or the base carriage and the transport carriage with features of claim 1. According to the aim of the present invention, preferred embodiments have been shown in the description of the figures and in the depending claims.

The transport set or transportation set is equipped with a chassis frame seated or rested on four swivel wheels and a raising and locking mechanism with directional mechanism. The transport frame, which is located over the chassis frame, has rollovers equipped with leading edges located on their side arms.

The sliding cradles or beds are equipped with sliding elements, preferably in the form of ball bearings and sliding elements, preferably in the form of the ball bearings at least right behind the rollovers. Wherein, at least the first sliding elements in the sliding cradles or beds are slightly deflected towards the outside. The locking mechanism of the transport carriage is equipped with an engaging hook, and through a shaft, a tension member with springs is connected with a releasing pedal.

The directional mechanism in the raising and locking mechanism is equipped with a self-aligning tripod or a three-arm element with a spring, a middle wheel and with a tension member of the raising and locking mechanism. The tension member of the raising and locking system is connected with the front arm of the transport carriage chassis using a slider.

According to the invention, cooperation of the base carriage and the transport carriage eliminates complicated and expensive mechanisms which uses external medias and gives independence of choice of used tractor type.

The construction, according to the invention, including elements raising the rollovers, supporting loading on the base carriage, rolling guides, combined with the transport carriage rollovers, gives feeling of smooth movement and minimises necessary force as well as provides ergonomic work of an operator.

The comfort of work of the operator is also increased by an easy, automatic manner of locking the transport carriage on the base carriage and unlocking by pressing the pedal.

Using of four wheels on the base carriages enables for moving along ramps without losing the stability of the set and without contact of the transport carriage with the ground, thus protecting it against changing track of the whole transport set.

In the transport carriages, four swivel wheels enable rotation in place, and a fifth fixed wheel, located in the middle of the construction, enables for the determining of the trajectory of the moving carriage along straight line. The self-aligning mounted middle wheel, regardless of the unevenness of the surface, on which it moves, always stays in contact with the ground.

The construction, according to the invention, provides reliability of the transport set, increases its ergonomics, independence of operation and predictability of traction with relatively low costs of production.

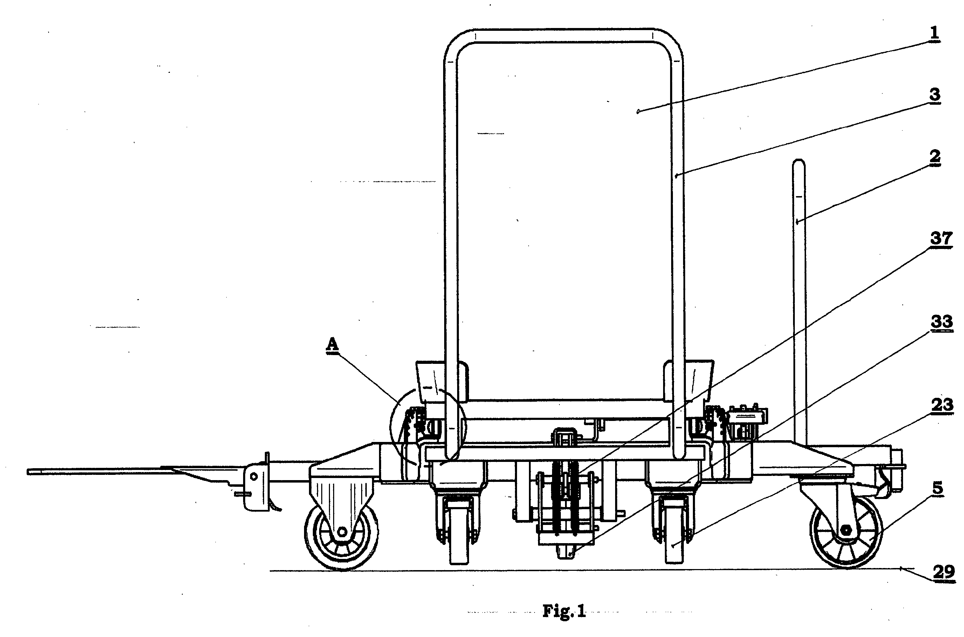

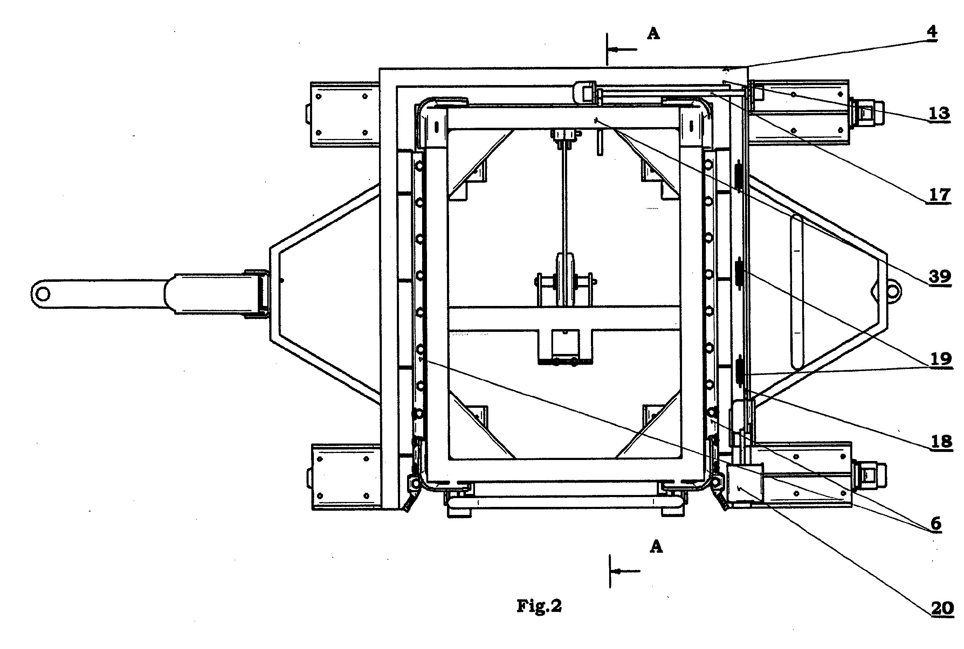

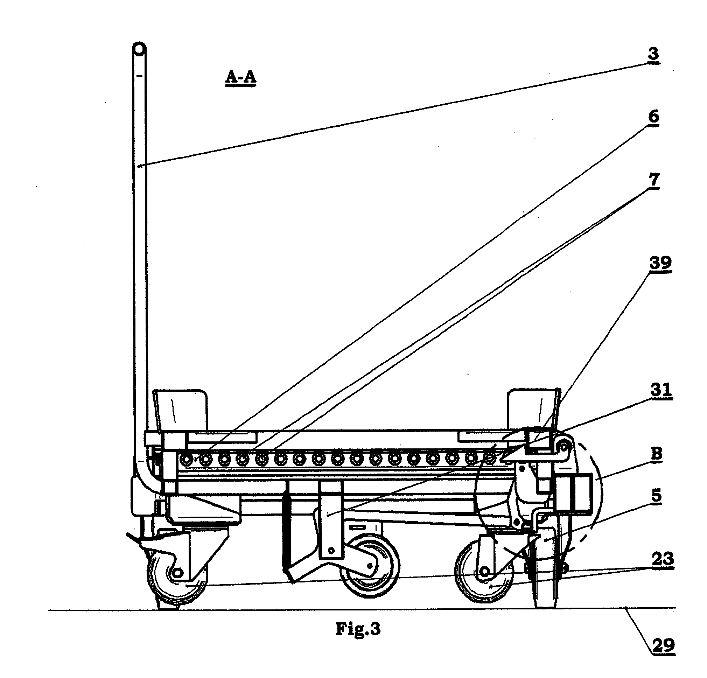

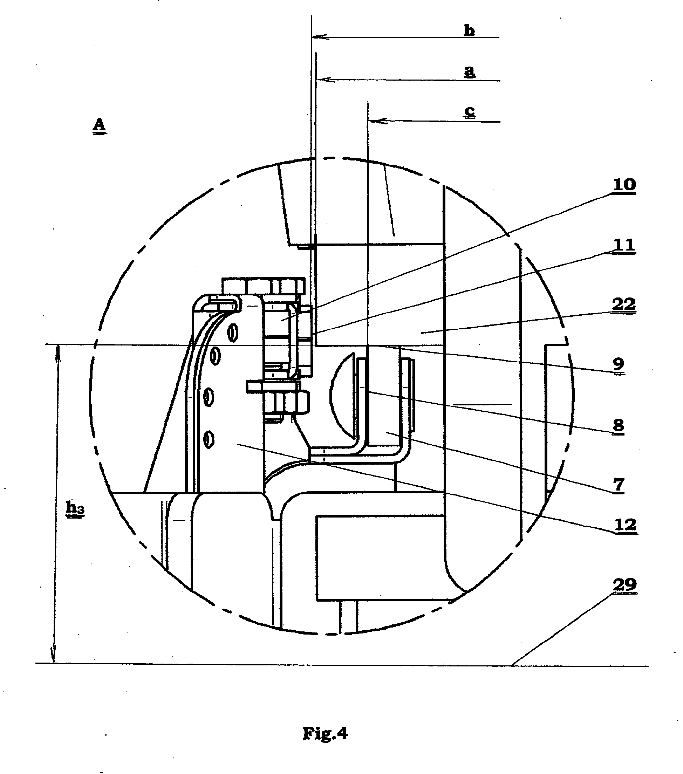

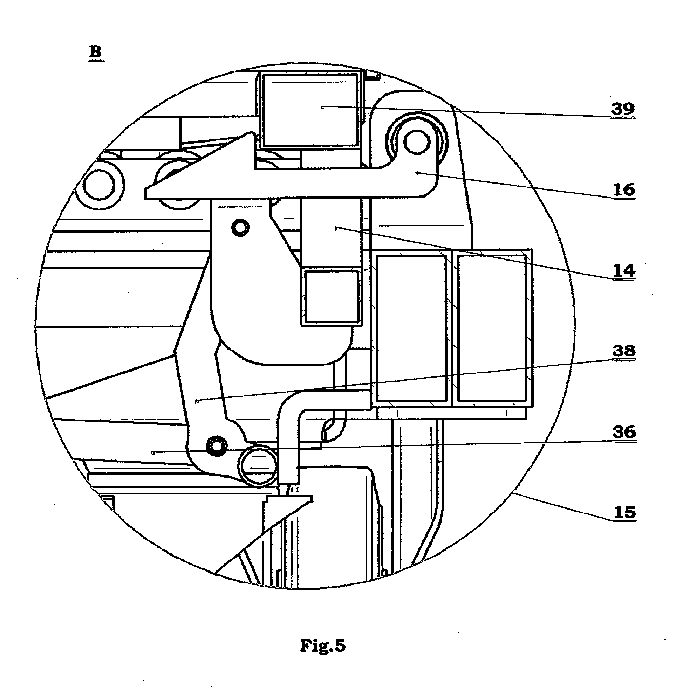

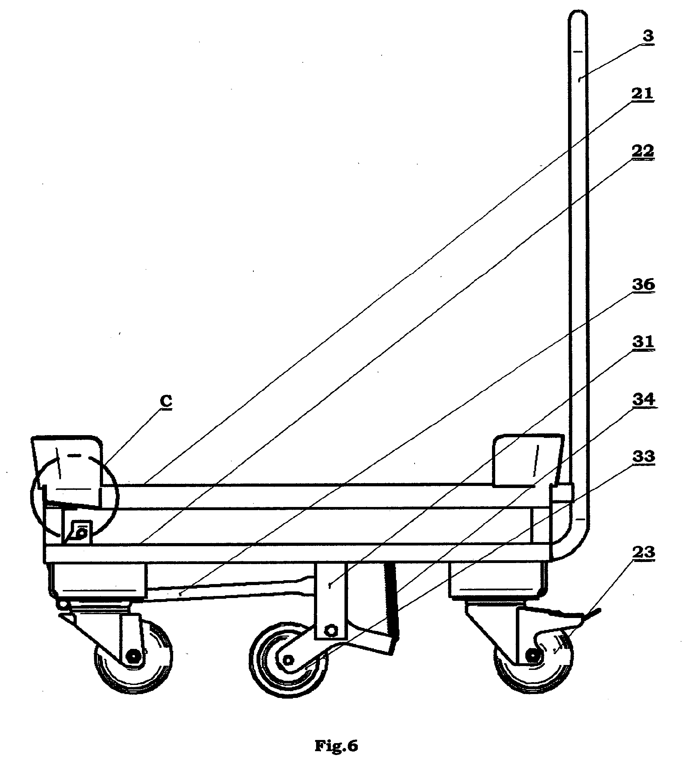

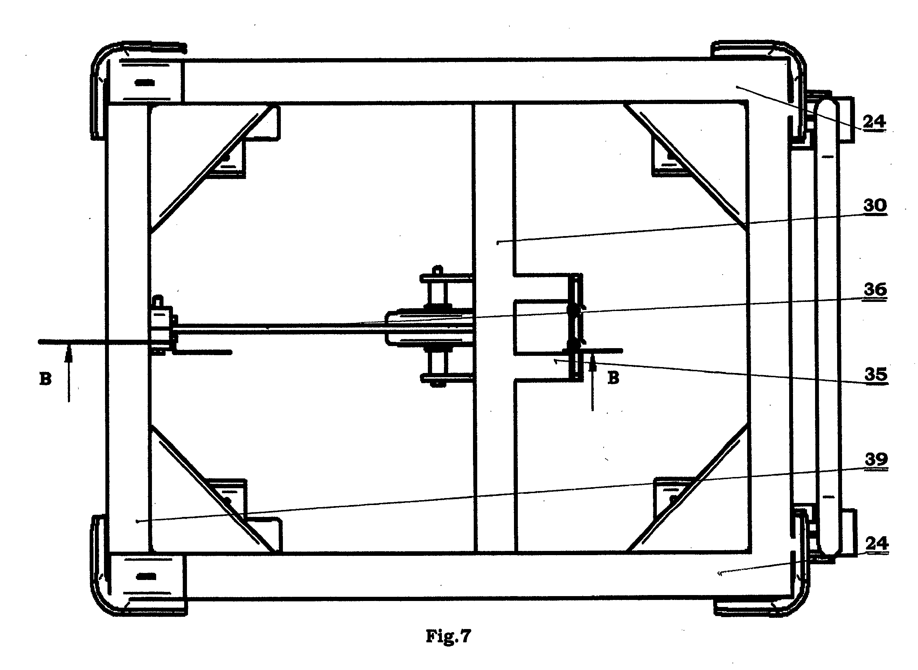

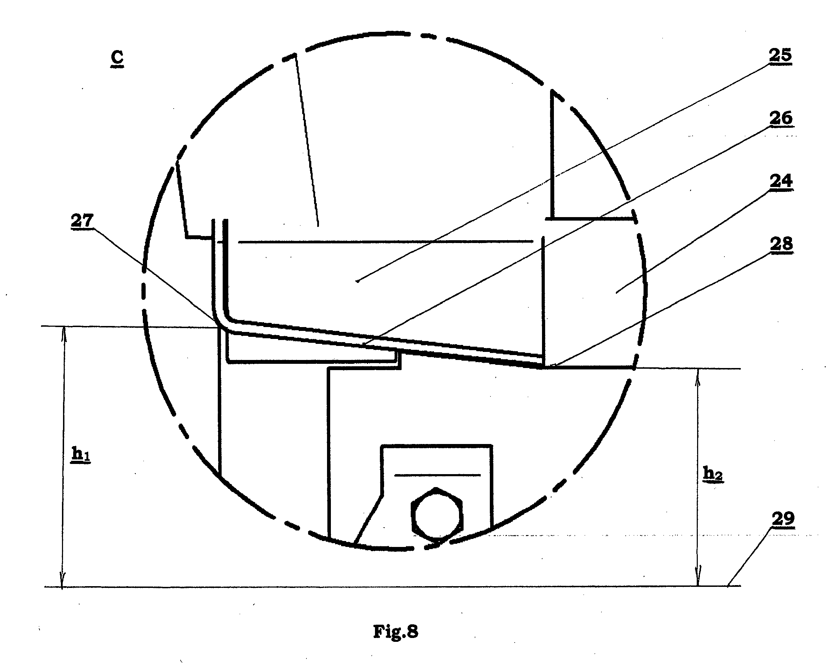

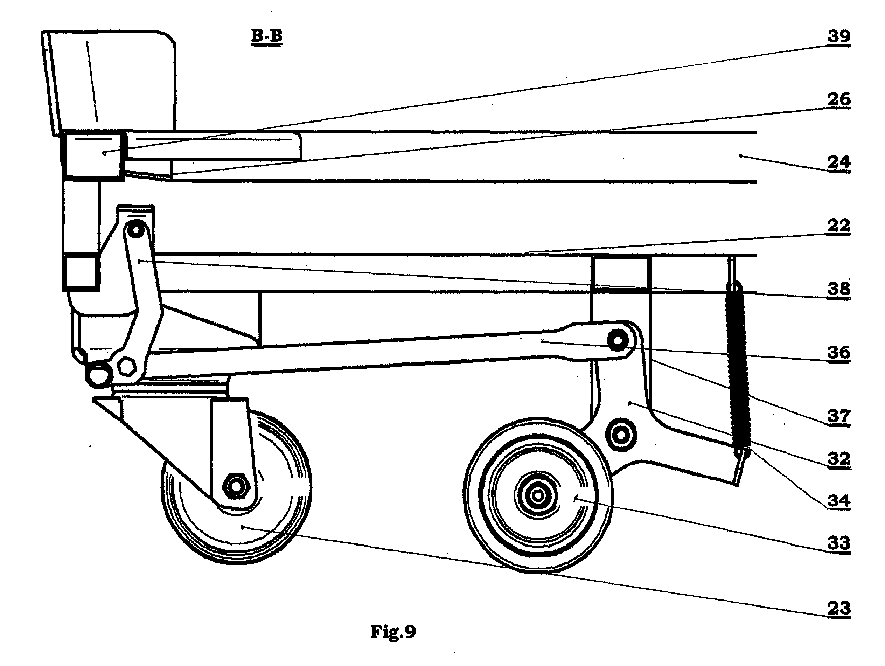

A transport set, according to the invention, is presented in the embodiment in drawing, where Fig. 1 presents a transport or transportation set from a side of a transportation or transport carriage, Fig. 2 presents a plan view of the set, Fig. 3 is a cross-section of the set along the A-A line marked in Fig. 2, Fig. 4 is a detail of A marked in Fig. 1, Fig. 5 is detail of B marked in Fig. 3, presenting a mechanism locking the transport carriage, Fig. 6 is a side view of the transport set, Fig. 7 is a top view of the transport set, Fig. 8, is a detail of C marked in Fig. 6 and Fig. 9 is a cross-section along the B-B line marked in Fig. 7, presenting a raising and locking mechanism with a directional mechanism.

A transportation or transport set 1 comprises a transportation or transport platform or a base carriage 2 and a transport carriage 3.

The base carriage 2 has a C-shaped frame 4, where side arms are located at an angle in relation to its longitudinal axis. This angle may be 90°, which means that in one of the embodiments, the side arms are located perpendicularly to the longitudinal axis of the base carriage 2. The frame 4 of the base carriage 2 seats or rests on four swivel wheels 5.

Sliding beds 6, along a whole length, are equipped with rolling elements 7, preferably ball bearings and sliding elements 10, with lower vertical side planes 8 and a top horizontal plane 9 and with top vertical side planes 11 providing side stabilisation of the transport carriage 3. The first two sliding elements 10 are ball bearings whereas the first sliding elements 10 are slightly deflected outwardly in relation to the remaining ones. At the entries to the sliding beds 6, in front of the sliding elements 10, vertical rollovers 12 are located, as shown in Figs. 3 and 4.

A side 13 of the frame 4 is equipped with a bump stop 14 and an automatic locking mechanism 15 of the transport carriage 3 with an engaging or catching hook 16 on a shaft 17. The shaft 17 is connected via a tension member 18, with springs 19, with a releasing pedal 20, as shown in Fig. 2.

The transport carriage 3 has a transport frame 21 connected to it, under which there is a chassis frame 22 on four swivel wheels 23. Its width a, as measured towards the longitudinal axis of the base carriage 2, is larger than the distance c between the lower vertical side plane 8 of the sliding beds 6 and is less than the distance b between the top vertical side planes 11 of the beds 6, which are equipped with vertical rollovers 12, as shown in Fig. 4.

Side arms 24 of the transport frame 21 have rollovers 25 with skewed bottom leading edges 26, with beginning 27 and end 28 used to bring in or introduce the frame 4 of the base carriage 2 onto the sliding beds 6.

The beginning 27 of the leading edge 26 is located at height h₁, as measured from the ground 29, and the end 28 of the leading edge 26 is located at height h₂, less than the height h₃ of the horizontal top plane of the sliding beds 6, as shown in Figs. 4 and 8.

A crossbar 30 is located between side arms of the chassis frame 22. A socket of directional mechanism 31 is located on the crossbar 30. The directional mechanism 31 is equipped with movable, pivotally fastened a tripod or a three-arm element 32, on the lowest arm of which there is a middle wheel 33 installed, which moves or deflects to the sides in relation to the longitudinal axis of the transport set 3. The middle wheel 33 deflects by moving in a vertical direction, and its deflection is controlled by a spring 34, fastened or fixed at one end to a slightly higher arm of the three-arm element 32 and at the other end to a socket 35 on the crossbar 30. A tension member 36 of a raising and locking mechanism 37 is mounted or fastened at one end to the highest arm of the three-arm element 32. The tension member 36 of the raising and locking mechanism 37 is mounted or fastened at the other end through a slider 38 to a front arm 39 of the chassis frame 19, as shown in Figs. 5, 7 and 9.

The direction of movement of the transport carriage 3, selected or chosen by the swivel wheels 23, is maintained by the middle wheel 33, which is pressed to the ground by the spring 34. The transport carriage 3 drives up to the base carriage 2 and is guided onto the rolling elements 7 of the sliding beds 6, between the sliding elements of the sliding beds 6, using the beginnings 27 of the rollovers 25 with the skewed leading edges 26. The direction of movement is stabilised by means of partially half-open vertical rollovers 12 or 25, as shown in Fig. 4.

Such the transport carriage 3, when slightly pushed, smoothly enters on the base carriage 2 trough the rolling elements 7 of the sliding beds 6.

The raising and locking mechanism 37, by hitting the bump stop 14 in the base carriage 2, via the slider 38 and the tension member 36, causing back movement of the three-arm element 32 and raising the middle wheel 33. At the same time, the engaging hook 16 of the locking mechanism 15 snaps onto the front frame 39 of the chassis frame 22, as shown in Figs. 1 and 5.

In this way, the transport carriage 3 is positioned on the base carriage 2 and is ready to go or to move one by one or in a set when towed by any tractor.

The unloading operation is begun by pressing the releasing pedal 20, which leads to the lowering of the engaging hook 16 and to the releasing of the transportation or transport carriage 3.

Pulling the transportation or transport carriage 3 towards the direction of moving causes reverse operation of the raising and locking mechanism 37 and the pressing the middle wheel 33 to the ground. The towed transportation or transport carriage 3 leaves the transportation platform or the base carriage 2 along the rolling elements 7 between the sliding elements 8 of the sliding beds 6 and is ready to travel or to move.

## Claims

1. A transport set comprising a transportation platform or a base carriage and a transport carriage able to be raised and rest on the base carriage, **characterised in that** the base carriage (2), resting on four swivel wheels (5), has a C-shaped frame with side arms located at an angle in relation to its longitudinal axis and equipped with sliding beds (6) with partially half-open vertical rollovers or pilot vertical surfaces (12) and a locking mechanism (15) whereby the transport carriage (3) located between the side arms of the base carriage (2) is equipped with a chassis frame (22) that seats or rests on four swivel wheels (23), a coupling system cooperating with a locking mechanism (15), immobilising the transport carriage on the base carriage and a raising and locking mechanism (37) with a directional mechanism (31) and a transport frame (21) seating or resting on the chassis frame (22) and adapted to enter on the sliding beds (6) of the base carriage (2) having a width (a), as measured in the direction of longitudinal axis of the transportation platform or base carriage (2), larger than a distance (c) between the lower vertical side planes of the sliding beds (6) and less than a distance (b) between top vertical side planes of the sliding beds (6), which are equipped with partially half-open rollovers or vertical pilot surfaces (9), whereas at a front and at a bottom, each of side elements (24) of the transport frame has rollovers (25) with skewed bottom leading edges (26), the beginnings (27) of which are located at a height (h₁), as measured from the ground (29), larger than a height(h₃), as measured from the ground (29), of the horizontal top plane of the sliding beds (6), and the ends (28) of which are located at a height (h₂), as measured from the ground (29), less than the height (h₃) of the horizontal top plane of the sliding beds (6).

2. The set according to claim 1, **characterised in that** the sliding beds (6) are equipped with rolling elements (7), preferably in the form of ball bearings, and sliding elements (8), preferably in the form of ball bearings, at least just downstream the partially half-open rollovers or vertical pilot surfaces (12).

3. The set according to claim 1, **characterised in that** the locking mechanism (15) of the transport carriage (3) is equipped with an engaging hook (16), and via the shaft (17), a pull rod (18) with springs (19) is coupled with the releasing pedal (20).

4. The set according to claim 1, **characterised in that** the directional mechanism (31) is equipped with a self-aligning three-arm element or coupling (32) with the spring (34), a middle wheel (33) and a pull rod (36) of the raising and locking mechanism (37).

5. The set according to claim 1 or 2, **characterised in that** at least the first sliding elements (8) in the sliding beds (6) are slightly deviated outwardly.

6. The set according to claim 1 or 2 or 3, **characterised in that** the sliding elements (8) are in the form of a sleeve made of plastic.

7. The set according to claim 1 or 4, **characterised in that** the pull rod (36) of the raising and locking mechanism (37) is connected with the front arm (39) of the chassis (22) of the transport carriage (3) via a slider (38).

## Patentansprüche

1. Transportsatz, enthaltend eine Transportplattform oder einen Basiswagen und einen Transportwagen zum Heben und Aufliegen auf dem Basiswagen, **dadurch gekennzeichnet, dass** der Basiswagen (2), welcher auf vier Lenkrollen (5) aufliegt, einen C-förmigen Rahmen mit Seitenarmen in einem Winkel zur Längsachse, ausgestattet mit verschiebbaren Lagern (6) mit teilweise halboffenen vertikalen Kippern oder vertikalen Führungsflächen (12) und einem Sperrmechanismus (15) aufweist, wobei der zwischen den Seitenarmen des Basiswagens gelagerte Transportwagen (3) mit einem auf vier Lenkrollen (23) gelagerten beziehungsweise aufliegenden Fahrwerkrahmen (22), einem mit dem Sperrmechanismus (15) zusammenarbeitenden Verbindungssystem, welches den Transportwagen auf dem Basiswagen arretiert und einem Hebe- und Sperrmechanismus (37) mit Lenkmechanismus (31) und einem auf dem Fahrwerkrahmen (22) gelagerten oder aufliegenden Transportrahmen (21) ausgestattet ist, welcher ausgelegt ist, in die verschiebbaren Lager (6) des Basiswagens (2) mit einer Breite (a) einzufahren, die, gemessen in Richtung der Längsachse der Transportplattform oder des Basiswagens (2), größer ist als die Entfernung (c) zwischen der unteren vertikalen Seite der Flächen von verschiebbaren Lagern (6) und kleiner ist als die Entfernung (b) zwischen den oberen vertikalen Seitenflächen von verschiebbaren Lagern (6), die mit teilweise halboffenen Kippern oder vertikalen Führungsflächen (9) ausgestattet sind, wobei vorne und unten jeder der Seitenteile (24) des Transportrahmens Kipper (25) mit schrägen unteren Führungsrändern (26) aufweist, deren Anfänge (27) sich auf einer Höhe (h₁) befinden, die, vom Boden (29) aus gemessen, größer ist als die Höhe (h₃), vom Boden (29) aus gemessen, der waagerechten oberen Fläche der verschiebbaren Lager (6), und deren Enden (28) sich auf einer Höhe (h₂) befinden, die, vom Boden (29) aus gemessen, kleiner ist als die Höhe (h₃) der waagerechten oberen Fläche der verschiebbaren Lager (6).

2. Transportsatz gemäß Anspruch 1, **dadurch gekennzeichnet, dass** die verschiebbaren Lager (6) mit drehbaren Teilen (7), bevorzugt als Kugellager, und verschiebbaren Teilen (8), bevorzugt als Kugellager, mindestens unmittelbar unterhalb teilweise halboffener Kipper oder vertikaler Führungsflächen (12) ausgestattet sind.

3. Transportsatz gemäß Anspruch 1, **dadurch gekennzeichnet, dass** der Sperrmechanismus (15) des Transportwagens (3) mit einem Einschalthaken (16) ausgestattet ist und der Seilzug (18) mit Federn (19) mit dem Freigabepedal (20) über einen Bolzen (17) verbunden ist.

4. Transportsatz gemäß Anspruch 1, **dadurch gekennzeichnet, dass** der Lenkmechanismus (31) mit einem Selbstausgleichs-Dreiarmteil oder einer Verbindung (32) mit einer Feder (34), einem Mittelrad (33) und einem Seilzug (36) des Hebe- und Sperrmechanismus (37) ausgestattet ist.

5. Transportsatz gemäß Anspruch 1 oder 2, **dadurch gekennzeichnet, dass** mindestens die ersten verschiebbaren Teile (8) in den verschiebbaren Lagern (6) leicht nach außen ausgeschwenkt sind.

6. Transportsatz gemäß Anspruch 1 oder 2 oder 3, **dadurch gekennzeichnet, dass** die verschiebbaren Teile (8) die Form einer Kunststoffbuchse aufweisen.

7. Transportsatz gemäß Anspruch 1 oder 4, **dadurch gekennzeichnet, dass** der Seilzug (36) des Hebe- und Sperrmechanismus (37) mit dem vorderen Arm (39) des Gehäuses (22) des Transportwagens (3) über einen Riegel (38) verbunden ist.

## Revendications

1. Un ensemble de transport comprenant une plate-forme de transport ou un chariot de base et un chariot de transport capable d'être soulevé et reposé sur le chariot de base, **caractérisé en ce que** le chariot de base (2), reposant sur quatre roues pivotantes (5), a un cadre en forme de C avec les bras latéraux situés à un angle par rapport à son axe longitudinal et équipé de paliers coulissants (6) avec des bascules partiellement semi-ouvertes verticales ou des surfaces verticales de guidage (12) et un mécanisme de verrouillage (15), grâce auquel le chariot de transport (3) situé entre les bras latéraux du chariot de base (2) est équipé d'un cadre de châssis (22) qui est fixé ou repose sur quatre roulettes pivotantes (23), un système d'accouplement coopérant avec un mécanisme de verrouillage (15), immobilisant le chariot de transport sur le chariot de base et un mécanisme de soulèvement et de verrouillage (37) avec un mécanisme de direction (31) et un cadre de transport (21) fixé ou reposant sur un cadre de châssis (22) et adapté pour entrer dans les paliers coulissants (6) de la base chariot (2) ayant une largeur (a) mesurée dans la direction de l'axe longitudinal de la plate-forme de transport ou de transport de base (2), supérieure à la distance (c) entre la face verticale basse des plans de paliers coulissants (6) et inférieure à la distance (b) entre les plans latéraux verticaux hauts des paliers coulissants (6), qui sont équipés de bascules partiellement semi-ouvertes ou des surfaces de guidage verticaux (9), chaque élément latéral (24) du cadre de transport ayant dans sa partie avant en bas des bascules (25) avec le bords de guidage inclinés (26) dont les origines (27) sont situées à la hauteur (h₁), mesurée à partir du sol (29) supérieure à la hauteur (h₃), mesurée à partir du sol (29) du plan horizontal haut des paliers coulissants (6) dont les extrémités (28) sont situées à la hauteur (h₂) mesurée à partir du sol (29) inférieure à la hauteur (h₃) du plan horizontal haut des paliers coulissants (6).

2. L'ensemble selon la revendication 1, **caractérisé en ce que** les paliers coulissants (6) sont équipés d'éléments rotatifs (7), de préférence sous forme de paliers à billes et d'éléments coulissants (8), de préférence sous forme de paliers à billes, au moins juste en aval des bascules partiellement semi-ouvertes ou des surfaces de guidage verticales (12).

3. L'ensemble selon la revendication 1, **caractérisé en ce que** le mécanisme de verrouillage (15) du chariot de transport (3) est équipé d'un crochet d'enclenchement (16), et par l'intermédiaire de la tige (17), le brin (18) avec des ressorts (19) est couplé à la pédale de déclenchement (20).

4. L'ensemble selon la revendication 1, **caractérisé en ce que** le mécanisme de direction (31) est équipé d'un élément à trois bras auto-alignant ou d'un couplage (32) avec le ressort (34), une roue intermédiaire (33) et un brin (36) du mécanisme de soulèvement et de verrouillage (37).

5. L'ensemble selon la revendication 1 ou 2, **caractérisé en ce qu'**au moins les premiers éléments coulissants (8) dans les paliers coulissants (6) sont légèrement déviés vers l'extérieur.

6. L'ensemble selon la revendication 1 ou 2 ou 3, **caractérisé en ce que** les éléments coulissants (8) sont en forme d'un manchon fait en matière plastique.

7. L'ensemble selon la revendication 1 ou 4, **caractérisé en ce que** le brin (36) du mécanisme de soulèvement et de verrouillage (37) est connecté au bras avant (39) du carter (22) du chariot de transport (3) au moyen d'un coulisseau (38).
